# EUROPÄISCHE PATENTANMELDUNG

(11) **EP 1 783 576 A2**
(43) Veröffentlichungstag der Anmeldung: **09.05.2007**
(21) Anmeldenummer: 06021107.5
(22) Anmeldetag: 07.10.2006
(51) Int. Cl.: G05D 16/20

(54) **Hydraulischer Antrieb**

(30) Priorität: 04.11.2005 DE 102005053106
(71) Anmelder: Bosch Rexroth AG, 70184 Stuttgart (DE)
(72) Erfinder: Scheller, Stefan, 97792 Riedenberg (DE)

(57) **Zusammenfassung**

Ein hydraulischer Antrieb umfasst einen hydraulischen Motor, einen Positionssensor, durch den ein Istwert einer Position des hydraulischen Motors erfassbar ist, ein Ventil, durch das ein Druckmittelweg zwischen dem Motor und einer Druckmittelquelle steuerbar ist, und eine Regelelektronik, der ein Positionssollwertsignal und der Istwert der Position des Motors zuführbar ist und mit der das Ventil durch ein Stellsignal im Sinne einer Lageregelung des Motors ansteuerbar ist. Erfindungsgemäß ist ein Ereignis, das vor dem Erreichen einer vorgegebenen Position des hydraulischen Motors auftritt, erfassbar und das Stellsignal wird in Abhängigkeit von dem Erfassen des Ereignisses begrenzt.

## Beschreibung

Die Erfindung betrifft einen hydraulischen Antrieb, der insbesondere eine Regelelektronik für eine Lageregelung aufweist, gemäß dem Oberbegriff des Patentanspruchs 1.

Hydraulischen Antriebe mit einer Lageregelung werden z.B. bei Stanzmaschinen oder Nibbelmaschinen zur Betätigung des Scheidwerkzeugs eingesetzt. Die DE 44 28 691 A1 beschreibt einen solchen hydraulischen Antrieb für eine Stanzmaschine oder eine Nibbelmaschine. Ein Hydrozylinder betätigt ein Stanzwerkzeug, mit dem ein Werkstück bearbeitet wird. Die Ist-Position des Kolben des Hydrozylinders wird durch einen Wegsensor erfasst und einer Regelelektronik zugeführt. Die Regelelektronik steuert ein Ventil, das den Hydrozylinder mit einer Druckmittelquelle bzw. einem Tankanschluss verbindet, mit einem Stellsignal an. Auf diese Weise wird der Zylinderkolben entsprechend einer Sollwertvorgabe verfahren. Üblicherweise lässt man den Zylinderkolben zwischen einem oberen und einem unteren Umkehrpunkt hin und her pendeln, um eine Stanzbearbeitung durchzuführen. Um die Geräuschentwicklung beim Wegbrechen des gestanzten Materials zu verringern, wird gemäß der DE 44 28 691 A1 der den Hydrozylinder beaufschlagende Druck erfasst und eine Ableitung des Drucksignals gebildet. Das abgeleitete Drucksignal wird dem Stellsignal so überlagert, dass es bei einem Wegbrechen des gestanzten Materials - d.h. bei einem Abfallen des Drucks - im Sinne einer Trennung des Hydrozylinders von der Druckmittelquelle wirkt.

Der untere Umkehrpunkt ist bei Stanz- und Nibbelanwendungen meist knapp - z.B. 1 mm - unterhalb der dem Werkzeug abgewandten, unteren Oberfläche des Werkstücks vorgegeben. Bei Annäherung an diesen Umkehrpunkt erhält das Ventil von der Regelelektronik ein Schließsignal. Beim Wegbrechen des gestanzten Materials erfährt der Hydraulikkolben und somit das Stanz- bzw. Nibbelwerkzeug durch die Wirkung des sich entspannenden Hydrauliköls und des sich entspannenden Maschinenaufbaus eine hohe Beschleunigung. Ab dem Wegbrechen des gestanzten Materials wird somit die restliche Strecke zum Umkehrpunkt sehr schnell zurückgelegt. Unter diesen Umständen ist der Lageregelkreis aufgrund seines Zeitverhaltens bei herkömmlichen hydraulischen Antrieben nicht in der Lage, ein deutliches Überschwingen des Werkzeugs über den Umkehrpunkt hinaus zu verhindern. Dadurch verlängern sich die Hubzeiten und demzufolge die Bearbeitungszeiten für jedes Werkstück. Außerdem kann es bei starkem Überschwingen zu einer Beschädigung des Werkstückes bzw. des Werkzeuges kommen.

Allgemein betrachtet ist es wünschenswert, mit einem hydraulischen Antrieb auch. unter dem Einfluss von erheblichen Störgrößen, wie z.B. einer plötzlich weg brechenden Gegenkraft, einen vorgegebenen Positionssollwert ohne oder nur mit einer minimalen Überschwingbewegung zuverlässig anfahren zu können.

Diese Aufgabe wird durch einen hydraulischen Antrieb mit den Merkmalen des Patentanspruchs 1 gelöst.

Der erfindungsgemäße hydraulische Antrieb umfasst einen hydraulischen Motor, einen Positionssensor, durch den ein Istwert einer Position des hydraulischen Motors erfassbar ist, ein Ventil, durch das ein Druckmittelweg zwischen dem Motor und einer Druckmittelquelle steuerbar ist, und eine Regelelektronik, der ein Positionssollwertsignal und der Istwert der Position des Motors zuführbar ist und mit der das Ventil durch ein Stellsignal im Sinne einer Lageregelung des Motors ansteuerbar ist. Es ist die Besonderheit der vorliegenden Erfindung, dass ein Ereignis, das vor dem Erreichen einer vorgegebenen Position des hydraulischen Motors auftritt, erfassbar ist und dass das Stellsignal in Abhängigkeit von dem Erfassen des Ereignisses begrenzt wird.

Die Erfindung beruht auf der Erkenntnis, dass in hochdynamischen hydraulischen Antrieben das Ventil einen hohen Anteil an der im Regelkreis auftretenden Zeitverzögerung hat. Wenn z.B. der Steuerkolben des Ventils ausgehend von einem hohen Öffnungsquerschnitt in eine Schließstellung gefahren werden soll, kann es zu unerwünscht großen Regelverzögerungen kommen. Durch die erfindungsgemäße Begrenzung des dem Ventil zugeführten Stellsignals, beruhend auf einem Ereignis vor Erreichen einer vorgegebenen Soll-Position, kann die Stecke, die der Ventilkolben zum Schließen zurücklegen muss, begrenzt werden. Somit wird auch die durch das Ventil verursachte Zeitverzögerung beim Stoppen der Bewegung des hydraulischen Motors auf einen niedrigen Wert begrenzt. Folglich ist die Zeitkonstante des Regelkreises bei Annäherung an die vorgegebene Position verringert. Bei Annährung an diese Position verhält sich der Regelkreis also besonders dynamisch. Dadurch ist auch unter Einwirkung erheblicher Störgrößen auf den hydraulischen Antrieb ein präzises Anfahren der vorgegebenen Position sichergestellt. Überschwingreaktionen werden deutlich verringert.

Weitere vorteilhafte Ausgestaltungen sind in den Unteransprüchen angegeben.

Gemäß einer besonders bevorzugten Weiterbildung der vorliegenden Erfindung ist ein Drucksensor vorgesehen, mit dem ein Druck des den Motor beaufschlagenden Druckmittels messbar ist. Das Stellsignal wird in Abhängigkeit von dem gemessenen Druck begrenzt. Dies stellt insbesondere bei Stanz- und Nibbelmaschinen bzw. bei allen Antrieben, bei denen vor Erreichen einer vorgegebenen Soll-Position ein mechanischer Widerstand zu überwinden ist, eine besonders effiziente Möglichkeit da, die Annäherung an die vorgegebene Position schon eine bestimmte Zeit vor dem Erreichen der vorgegebenen Position zu erfassen und den Regelkreis im Sinne einer Verkleinerung der Zeitkonstante des Stellgliedes - also des Ventils - zu beeinflussen. So kann man insbesondere bei Nibbelmaschinen zum Einen eine große Ventilöffnung während der unbelasteten Stellbewegung zulassen und nutzt zum Anderen die Vorteile einer geringen, schnell schließbaren Ventilöffnung ab dem Aufsetzen des Werkzeuges auf ein Werkstück.

Vorzugsweise umfasst dazu die Regelelektronik eine Vergleicherschaltung, die den gemessenen Druck mit einem vorgegebenen Druckschwellwert vergleicht.

Das Stellsignal wird dann begrenzt, wenn der gemessene Druck den Druckschwellwert übersteigt. Ein solches Verhalten kann mittels der Regelelektronik besonders einfach implementiert werden. Zudem wird verhindert, dass die Begrenzung der Ventilöffnung durch Druckschwankungen aktiviert wird, die nicht durch den Kontakt mit einem Werkstück hervorgerufen werden, sondern die durch andere Effekte, z.B. Beschleunigungsvorgänge, Pulsationen usw., des Hydrauliksystems bedingt sind.

Eine weitere bevorzugte Ausbildungen sieht vor, ein Ereignis vor Erreichen der vorgegebenen Position durch einen Kraftsensor zu erfassen, der eine auf den Motor einwirkende Kraft oder eine durch den Motor auf ein Maschinenelement ausgeübte Kraft erfasst. Dazu kann ein z.B. Dehnungsmesssteifen oder ein Kraftmessbolzen an einem Werkstücktisch verwendet werden. Alternativ kann auch ein elektrisches Schaltelement - z.B. ein Kontaktschalter, der ein Auftreffen eines Werkzeugs auf einem Blech registriert, eine Lichtschranke, etc. - für diesen Zweck vorgesehen sein. Aufgrund des Wegsignals könnte ebenfalls das Annähem an die vorgegebene Position festgestellt werden, und bei Unterschreiten eines bestimmten Abstandes zur vorgegebenen Position das Stellsignal begrenzt werden. Bei Stanz- oder Nibbelmaschinen würde dieser Abstand an die Dicke des zu stanzenden Blechs angepasst werden. So kann man wiederum eine große Ventilöffnung während der unbelasteten Stellbewegung zulassen und eine geringe, schnell schließbare Ventilöffnung bei Aufsetzen des Werkzeuges auf das Blech erzielen.

Die vorgenannten Maßnahmen zur Erfassung eines vor Erreichen einer vorgegebenen Position auftretenden Ereignisses können selbstverständlich auch miteinandet kombiniert werden, um eine hohe Zuverlässigkeit bei der Erfassung zu gewährleisten. Ebenso ist es denkbar, verschiedene vor Erreichen der vorgegebenen Position auftretende Ereignisse zu erfassen und die Begrenzung des Stellsignals in Abhängigkeit von mehreren Ereignissen durchzuführen.

Vorzugsweise umfasst die Regelelektronik einen Signalbegrenzer, mit dem das dem Ventil zugeführte Stellsignal auf einen Wert begrenzbar ist, der einer Ventilöffnung von weniger als 20% einer maximalen Ventilöffnung entspricht. Aus einer entsprechenden Position ist der Ventilkolben sehr schnell in eine Schließstellung verstellbar, insbesondere, wenn ein Ventil mit einer sehr steilen Öffnungskennlinie im Bereich einer geringer Öffnung verwendet wird.

Eine weitere besonders bevorzugte Ausbildung der vorliegenden Erfindung ist dadurch gekennzeichnet, dass der Motor als Hydrozylinder ausgebildet ist, dass mit dem Hydrozylinder ein Schneidwerkzeug betätigbar ist und dass die Begrenzung des Stellsignals durch den Kontakt des Scheidwerkzeugs mit einem Werkstück vor einem Durchbrechen des Scheidwerkzeugs durch das Werkstück ausgelöst wird. Diese Ausbildung erlaubt es, den erfindungsgemäßen hydraulischen Antrieb in Schneidmaschinen, z.B. Nibbelmaschinen einzusetzen, bei denen strenge Anforderungen hinsichtlich eines Überschwingens im unteren Umkehrpunkt der Bewegung des Schneidwerkzeugs bestehen. Erfindungsgemäß wird der Regelkreis ab dem Aufsetzen des Werkzeuges auf ein Werkstück im Sinne einer Verkleinerung seiner mechanisch bedingten Zeitkonstante beeinflusst. Dadurch werden Überschwingvorgänge nach dem Wegbrechen des Werkstücks weitestgehend vermieden. Zudem können unbelastete Stellbewegungen des Hydrozylinders mit hoher Geschwindigkeit ausgeführt werden.

Nachfolgend werden die vorliegende Erfindung und deren Vorteile unter Bezugnahme auf das in der einzigen Figur dargestellte Ausführungsbeispiel näher erläutert.

Es zeigt:

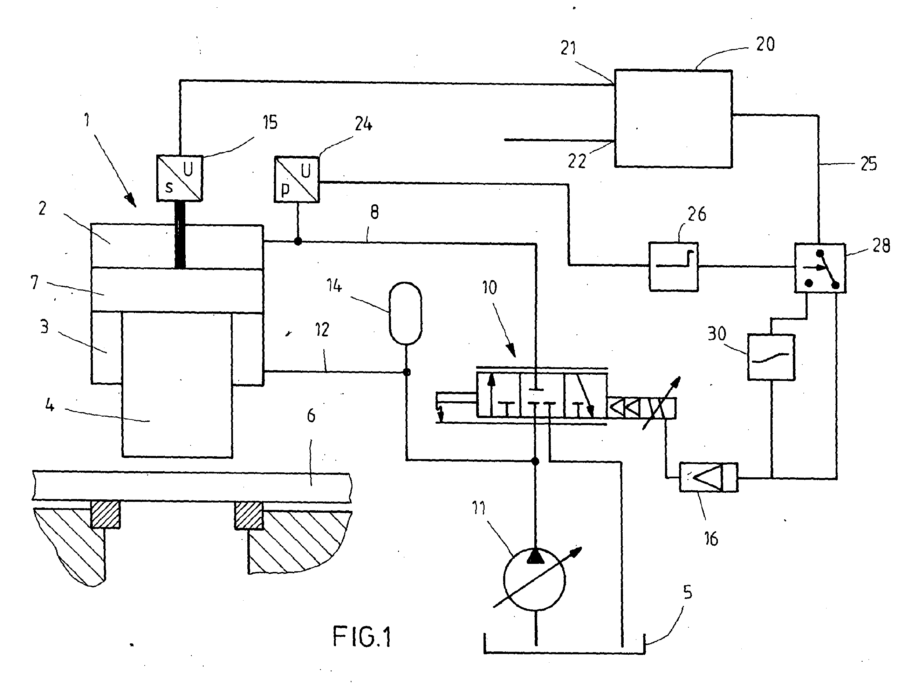

- Fig. 1: ein Schaltbild eines hydraulischen Antriebs mit einem Regelkreis, der durch einen hydraulischen Zylinder bzw. dessen Kolben, einen Wegsensor, der die Lage des Kolbens misst, ein Ventil, und eine Regelelektronik, die dem Ventil einen Stellwert vorgibt, gebildet wird. Mit einem Begrenzer ist ein an das Ventil abgegebenes Stellsignal zusätzlich beeinflussbar.

Gemäß Figur 1 besitzt ein hydraulischer Antrieb einen Differentialzylinder 1 mit einem darin beweglich angeordneten Kolben 7 und mit einer durch den Kolben 7 verschiebbaren Kolbenstange 4. Der Kolben 7 unterteilt den Hydrozylinder 1 in einen kolbenstangenseitigen Druckraum 3 und einen kolbenstangenabseitigen Druckraum 2. An der Kolbenstange 4 ist ein Schneidwerkzeug angebracht (nicht dargestellt) mit dessen Hilfe eine Schneidbearbeitung eines Werkstück 6 ausgeführt wird. Der kolbenstangenseitige Druckraum 3 ist über die Leitung 12 mit einer Hydropumpe 11 und einem Speicher 14 verbunden. Der kolbenstangenabseitige Druckraum 2 ist über die Leitung 8 mit einem Ventil 10 verbunden. Das Ventil steuert mit seinem Ventilkolben die Verbindung des Druckraums 2 mit entweder der Druckmittelquelle - d.h. der Hydropumpe 11 und dem Speicher 14 - oder mit einem Vorratsbehälter 5.

Das Ventil 10 wird über einen Ventilregler 16 angesteuert. Der Ventilregler 16 steuert einen Stellmagneten des Ventils 10 mit einem bestimmten Strom an. Der Ventilregler 16 erhält ein Stellsignal bezüglich der Auslenkung des Ventilkolbens und steuert den Stellmagneten so an, dass der Ventilkolben die entsprechende Position einnimmt.

Die Position des Kolbens 7 des Differentialzylinders 1 wird durch den Wegsensor 15 erfasst und einer Regelelektronik 20 an einem Eingang 21 als Ist-Signal zugeführt. Die Regelelektronik 20 besitzt einen weiteren Eingang 22, an dem sie ein Soll-Signal für die Position des Kolbens 7 zugeführt bekommt. Aus diesen Signalen erzeugt die Regelelektronik 20 ein Stellsignal 25; um das Ventil 10 anzusteuern. Der Druck, der im kolbenstangenabseitigen Druckraum 2 des Differentialzylinders 1 herrscht, wird durch den Drucksensor 24 erfasst und einer Schwellwertstufe 26 zugeführt. Das Ausgangssignal der Schwellwertstufe 26 steuert eine Signalweiche 28 an. Durch die Signalweiche 28 wird das Stellsignal 25 der Regelelektronik 20 entweder dem Ventilregler 16 direkt zugeführt oder aber zunächst einem Signalbegrenzer 30 übergeben. Das Ausgangssignal des Signalbegrenzers 30 ist wiederum dem Ventilregler 16 zugeführt.

Im Folgenden wird die Funktionsweise des in Figur 1 dargestellten hydraulischen Antriebs erläutert. Das Ventil 10, der Wegsensor 15 und die Regelelektronik 20 bilden einen Lageregelkreis hinsichtlich der Position des Kolbens 7 des Differentialzylinders 1. Im Falle einer Nibbelmaschine oder Stanzmaschine wird am Sollwerteingang 22 der Regelelektronik abwechselnd ein unterer und ein oberer Umkehrpunkt der Nibbelbewegung als Sollwert vorgegeben. Der untere Umkehrpunkt liegt knapp unterhalb der dem Werkzeug abgewandten, unteren Oberfläche des Werkstücks. Die Regelelektronik erzeugt abhängig von dem Sollwert und der Ist-Position des Kolbens 7 ein Stellsignal 25 zur Ansteuerung des Ventils 10. Nur nebenbei sei bemerkt, dass das Ventil 10 zusammen mit seinem Ventilregler 16 einen unterlagerten Lageregelkreis hinsichtlich der Position des Ventilkolbens darstellt.

Der Drucksensor 24 erfasst den Druck mit dem der Druckraum 2 beaufschlagt ist. Dieses Drucksignal wird der Schwellwertstufe 26 zugeführt. Die Schwellwertstufe 26 gibt ein Signal aus, falls das Drucksignal einen vorgegebenen Schwellwert übersteigt. In diesem Fall schaltet die Signalweiche 28 von der in Figur 1 dargestellten Schaltstellung, in der sie das Stellsignal 25 dem Ventilregler 16 direkt zuführt, in eine Schaltstellung, in der sie das Stellsignal 25 dem Begrenzer 30 zuführt. Das begrenzte Schaltsignal wird dem Ventilregler 16 zugeführt.

Bei Auftreten einer Kraft, die der Abwärtsbewegung des Kolbens 7 entgegengerichtet ist, steigt der Druck im Druckraum 2 an. Dies ist der Fall, wenn das Werkzeug einer Nibbelmaschine auf einem Werkstück auftrifft. Zu diesem Zeitpunkt ist das Ventil 10 noch relativ weit geöffnet, da eine Abweichung zwischen der Sollposition des Werkzeugs, die dem unteren Umkehrpunkt entspricht, und der aktuellen Position des Werkzeugs auf der dem Differentialzylinder 1 zugewandten, oberen Werkstückoberfläche vorliegt. Durch die Zufuhr von Druckmittel erhöht sich der Druck im Druckraum 2 weiter, bis das Material des Werkstücks schließlich weg bricht. Bei Erreichen eines vorgegebenen Drucks, vor einem Wegbrechen des Werkstückmaterials, gibt die Schwellwertstufe ein Signal aus, durch welches die Signalweiche 28 so angesteuert wird, dass das Stellsignal 25 dem Begrenzer 30 zugeführt wird. Dieser begrenzt das Stellsignal und führt es dem Ventilregler 16 zu. Damit ist ab dem Erreichen des Druckschwellwerts die maximale Öffnung des Ventils 10 begrenzt. Wenn das Werkstückmaterial schließlich wegbricht und das Werkzeug an der unteren, dem Differentialzylinder 1 abgewandten Oberfläche des Werkstücks durchtritt, kann das Ventil 10 bei Erreichen des unteren Umkehrpunktes sehr schnell schließen. Dadurch wird ein Überschwingen des Kolbens 7 bzw. des Werkzeugs am unteren Umkehrpunkt wirkungsvoll verhindert oder zumindest stark vermindert.

Nach dem Wegbrechen des Werkstückmaterials ist der im Druckraum 2 anstehende Druck wieder unter den Schwellwert abgefallen. Demzufolge befindet sich die Signalweiche wieder in der Stellung, in der das Stellsignal 25 dem Ventilregler 16 direkt zugeführt wird. Bei einer nachfolgenden Aufwärtsbewegung und einer erneuten Abwärtsbewegung steht bis zum erneuten Aufsetzten des Werkzeugs auf dem Werkstück potentiell die unbegrenzte Ventilöffnung zur Verfügung. Derartige Hubbewegungen mit geringer Last können also mit hoher Geschwindigkeit durchgeführt werden.

Es ist zweckmäßig, den Wert, auf den die Öffnung des Ventils begrenzt wird, so festzulegen, dass ein zuverlässiges Stoppen des Werkzeuges am unteren Umkehrpunkt innerhalb der für die jeweilige Nibbelmaschine zulässigen Abweichung gewährleistet ist. Dazu wird man insbesondere das Zeitverhalten des Ventils beim Schließen aus einer betätigten Stellung, die weiteren, fixen Zeitkonstanten des Regelkreises und den nach Wegbrechen des Werkstückmaterials noch zur Verfügung stehenden Anhalteweg berücksichtigen. Eine Begrenzung der Ventilöffnung auf geringe Werte, z.B. auf unter 20% der maximalen Ventilöffnung, stellt eine präzises Anfahren des vorgegebenen Umkehrpunktes sicher.

Die maximal erreichbare Geschwindigkeit des Werkzeuges ist natürlich durch die Begrenzung der Ventilöffnung eingeschränkt. Dies erhöht die Bearbeitungstaktzeit jedoch nicht, da die Werkzeuggeschwindigkeit nur während der Durchdringung des Werkstückes potentiell eingeschränkt ist. Die maximal mögliche Geschwindigkeit wird bei der Durchdringung des Werkstückes aufgrund der Last beim Schneidvorgang ohnehin nicht erreicht. Insgesamt erzielt man eine Zeitersparnis aufgrund der Verminderung einer Überschwingbewegung.

### Bezugszeichentiste

- 1: Differentialzylinder
- 2: Kolbenstangenabseitiger Druckraum
- 3: Kolbenstangenseitiger Druckraum
- 4: Kolbenstange
- 5: Vorratsbehälter
- 6: Werkstück
- 7: Kolben
- 8: Druckleitung
- 10: Ventil
- 11: Hydropumpe
- 12: Druckleitung
- 14: Speicher
- 15: Wegsensor
- 16: Ventilregler
- 20: Regelelektronik
- 21: Istwert-Eingang
- 22: Sollwert-Eingang
- 24: Drucksensor
- 25: Stellsignal
- 26: Schwellwertstufe
- 28: Signalweiche
- 30: Signalbegrenzer

## Patentansprüche

1. Hydraulischer Antrieb, insbesondere für eine Nibbelmaschine, mit einem hydraulischen Motor (1), mit einem Positionssensor, durch den ein Istwert einer Position des hydraulischen Motors (1) erfassbar ist, mit einem Ventil (10), durch das ein Druckmittelweg zwischen dem Motor (1) und einer Druckmittelquelle (11) steuerbar ist, und mit einer Regelelektronik (20), der ein Positionssollwertsignal und der Istwert der Position des Motors (1) zuführbar ist und mit der das Ventil (10) durch ein Stellsignal im Sinne einer Lageregelung des Motors (1) ansteuerbar ist,
**dadurch gekennzeichnet, dass**
ein Ereignis, das vor dem Erreichen einer vorgegebenen Position des hydraulischen Motors (1) auftritt, erfassbar ist und
dass das Stellsignal in Abhängigkeit von dem Erfassen des Ereignisses begrenzt wird.

2. Hydraulischer Antrieb nach Anspruch 1, **dadurch gekennzeichnet, dass** ein Drucksensor (24) vorgesehen ist, mit dem ein Druck des den Motor (1) beaufschlagenden Druckmittels messbar ist, und dass das Stellsignal in Abhängigkeit von dem gemessenen Druck begrenzt wird.

3. Hydraulischer Antrieb nach Anspruch 2, **dadurch gekennzeichnet, dass** die Regelelektronik (20) eine Vergleicherschaltung (26) umfasst, die den gemessenen Druck mit einem vorgegebenen Druckschwellwert vergleicht, und dass das Stellsignal dann begrenzt ist, wenn der gemessene Druck den Druckschwellwert übersteigt.

4. Hydraulischer Antrieb nach einem der vorhergehenden Ansprüche, **dadurch gekennzeichnet, dass** ein Kraftsensor vorgesehen ist, der eine auf den Motor (1) einwirkende Kraft oder eine durch den Motor (1) auf ein Maschinenelement ausgeübte Kraft erfasst, und dass das Stellsignal in Abhängigkeit von der erfassten Kraft begrenzt wird.

5. Hydraulischer Antrieb nach einem der vorhergehenden Ansprüche, **dadurch gekennzeichnet, dass** zur Erfassung des Ereignisses ein elektrisches Schaltelement vorgesehen ist.

6. Hydraulischer Antrieb nach einem der vorhergehenden Ansprüche, **dadurch gekennzeichnet, dass** die Regelelektronik (20) einen Signalbegrenzer (30) umfasst, mit dem das dem Ventil (10) zugeführte Stellsignal auf einen Wert begrenzbar ist, der einer Ventilöffnung von weniger als 20% einer maximalen Ventilöffnung entspricht.

7. Hydraulischer Antrieb nach einem der vorhergehenden Ansprüche, **dadurch gekennzeichnet, dass** der Motor als Hydrozylinder (1) ausgebildet ist, dass mit dem Hydrozylinder (1) ein Schneidwerkzeug betätigbar ist und dass die Begrenzung des Stellsignals durch den Kontakt des Scheidwerkzeugs mit einem Werkstück (6) vor einem Durchbrechen des Scheidwerkzeugs durch das Werkstück (6) ausgelöst wird.
